# EUROPEAN PATENT APPLICATION

(11) **EP 4 748 541 A1**
(43) Date of publication of application: **27.05.2026**
(21) Application number: 24215146.2
(22) Date of filing: 25.11.2024
(51) Int. Cl.: B25J 15/06

(54) **VACUUM END-EFFECTOR FOR INDUSTRIAL USE**

(71) Applicant: MOVU, 9160 Lokeren (BE)
(72) Inventor: Loquet, Frederik, 9100 Sint-Niklaas (BE)
(74) Representative: Ipsilon Belgium

(57) **Abstract**

The invention relates to a vacuum end effector for a robotic arm used in industrial applications, designed to enhance flexibility and efficiency in material handling. The end effector comprises a longitudinal hollow body with a proximal portion for coupling to the robotic arm and a distal portion for picking up goods. Integrated within the hollow body is a venturi vacuum cartridge that generates a vacuum in a vacuum chamber when connected to a high-pressurized air input. The device features a high-pressurized air input connector and a suction cup directly connected to the vacuum chamber. The design includes a multistage venturi vacuum generator, a mechanical coupling for easy attachment, an airtight sealing, a vacuum sensor, and a multi-bellows suction cup. These components ensure efficient vacuum generation, secure attachment, and a strong grip on various surfaces, making the end effector suitable for diverse industrial tasks.

## Description

### Field of the Invention

The present invention pertains to the field of industrial automation, specifically to robotic end-effectors used in material handling and manipulation tasks. End-effectors are critical components of robotic arms, enabling them to interact with and manipulate objects in various industrial settings, such as manufacturing, packaging, and assembly lines. The invention focuses on vacuum-based end-effectors, which utilize suction to pick up and hold objects, offering a non-invasive and versatile method for handling a wide range of materials and shapes.

### Background of the Invention

Traditional vacuum end-effectors for industrial use typically consist of a suction cup connected to a vacuum pump via a flexible vacuum tube. The vacuum pump is often positioned at a considerable distance from the suction cup due to its bulky form factor, which is not suitable for direct integration at the end of a robotic arm. This setup results in several inefficiencies, including slower vacuum response times and reduced suction power, as the vacuum must travel through the length of the tube before reaching the suction cup. There's a difference between a vacuum pump and a vacuum system based on venturi's principle. Vacuum pumps, that for instance may be rotary pumps, will produce a very large air flow and high suction power, but require a lot of continuous electrical power. Venturi pumps on the other hand are less responsive and lose their suction power when placed further from the suction point or suction cup.

Moreover, existing vacuum end-effectors lack the flexibility to adjust the vacuum intensity based on the structural and material characteristics of the objects being manipulated. For instance, insufficient suction may occur if an object is too heavy or has an irregular surface texture, leading to a broken seal between the suction element and the object's surface. Conversely, excessive vacuum intensity can damage delicate or pliable objects. Additionally, the time required to develop adequate suction is often too long, resulting in longer cycle times per object manipulated.

Another significant limitation of current vacuum end-effectors is their form factor. Traditional designs are often T-shaped and too broad, making them unsuitable for applications requiring a compact and efficient end-effector that can be easily integrated with the end of a robotic arm. This mismatch in form factor leads to suboptimal space utilization and hinders the overall efficiency of the robotic system.

### Summary of the Invention

It is an object of the invention to resolve the lack of flexibility and efficiency in traditional vacuum end-effectors for industrial use, particularly in adjusting the vacuum intensity to the structural and material characteristics of the objects being manipulated. Traditional end-effectors are also not suitably designed to match the form factor required for the end of a robotic arm, leading to inefficiencies in space utilization and vacuum generation.

To this aim, and according to a first aspect of the invention, there is provided a vacuum end effector for a robotic arm for industrial use, comprising: a longitudinal hollow body, said hollow body comprising a proximal portion for mechanically coupling with said robotic arm and a distal portion for picking up goods, a venturi vacuum cartridge integrated into said hollow body and configured to produce a vacuum in a vacuum chamber that is configured at the distal portion of said hollow body when connected to a high-pressurized air input, a high-pressurized air input connector feeding said venturi vacuum cartridge with high-pressurized air, and a suction cup connected directly to said vacuum chamber of said vacuum cartridge at said proximal portion of said hollow body.

A vacuum end effector, also known as a vacuum gripper or suction cup, is a type of end-of-arm tooling used in robotics and automation to handle and manipulate objects. The end effector creates a vacuum, typically using a pump or compressed air through a Venturi system. When the vacuum end effector is placed against an object, the air between the object and the end effector is evacuated, creating a pressure differential. This causes atmospheric pressure to push the object against the end effector, effectively gripping it. To release the object, the vacuum is simply turned off, or in some cases, a small amount of positive pressure is applied to help separate the object from the end effector.

The longitudinal hollow body of the invention has to be understood as a longitudinal hull, sleeve or shaft, which may be made for instance from metal or plastic, that may encapsulate a number of the components of the end-effector, such as the venturi vacuum cartridge, the vacuum chamber and portions of the suction cup. The longitudinal hollow body may be for instance cylindrical or cuboid in shape, and determines to a great extent the overall shape of the end effector.

The longitudinal hollow body or shaft has a proximal portion that is configured to couple the device to the robotic arm. The proximal portion has to be understood as the portion of the longitudinal hollow body that is closest to the robotic arm. The specific configuration of the attachment point of the robotic arm will dictate the necessary adaptations for the shaft. The coupling between the shaft and the robotic arm can be achieved through various mechanisms, including but not limited to locking mechanisms, such as quick-release mechanisms, threaded connections, a bayonet mount or alike. In the end, the locking mechanism at the proximal portion of the shaft has to be sufficiently solid to ensure that the end effector can be operated at the desired movement speeds of the robotic arm. A solid locking mechanism ensures that the end effector remains securely attached to the robotic arm, preventing any wobble or play that could affect the precision of the robot's movements. This is crucial for tasks that require high accuracy, such as picking and placing objects. The locking mechanism at the proximal portion of the shaft has to be sufficiently solid to ensure that the end effector can be operated at the desired movement speeds of the robotic arm.

The shape of the longitudinal hollow body or shaft is advantageous because it allows the end effector to easily access the entire picking area of a container from which or to which the robotic picker needs to handle goods or objects. It is the distal portion of the longitudinal hollow body that reaches into the container to pick up the goods or objects.

At the distal end of the vacuum end effector of the invention, a suction cup is positioned with its cup-shaped portion facing outward, making it the most distal component of the device. The inner part of the suction cup is connected to the vacuum chamber using a seal or thread, ensuring direct contact with the vacuum source. This arrangement benefits from immediate vacuum creation and achieves the highest vacuum level due to its proximity to the vacuum chamber.

The longitudinal hollow body comprises the venturi vacuum cartridge, which is a component used in vacuum systems to generate a vacuum using the Venturi effect. A cartridge is a self-contained, often removable, component or assembly that houses specific functional elements of a larger system. Cartridges are designed to be easily inserted, replaced, or maintained, providing modularity and convenience. They are used in a wide range of applications across various industries. Cartridges are designed to be easily inserted and removed, making them modular components of a larger system.

The Venturi effect is a phenomenon where a fluid flowing through a constricted section of a pipe increases in velocity and decreases in pressure. In the context of a vacuum cartridge, this principle is used to create a vacuum without the need for moving parts like those found in traditional vacuum pumps, which makes them simple, reliable, and low-maintenance. A Venturi vacuum cartridge is a self-contained unit that can be integrated into vacuum systems, such as those used in robotic end effectors.

The vacuum end effector of the invention comprises a high-pressurized air input connector feeding the venturi vacuum cartridge with high-pressurized air. For that purpose, the connector should be made from a durable material that can withstand high pressure, such as stainless steel, brass, or high-strength plastic. The connector preferably has threads that match those on the cartridge's inlet port. This allows for a secure and airtight connection.

The high-pressurized air input connector is connected to a compressed air supply or compressor, which provides the necessary highpressure air. This high-pressurized air is then directed into the Venturi vacuum cartridge through the connector. In a preferred embodiment, the high-pressurized air input connector is located at the proximal end of the longitudinal hollow body such that the tubing that feeds the input connector with the pressurized air does not interfere with the distal end picking up goods, nor with the rim or edge of the bin from which the goods are picked.

The suction cup of the vacuum end effector of the invention is a crucial component of a vacuum end effector, as it directly interacts with the objects being picked up. The suction cup may have bellows or a conical shape, which allows it to conform to the surface of the object being picked up. It is preferably made from silicone for durability and good sealing properties. This shape also provides flexibility and the ability to create a good seal. The suction cup is preferably flexible enough to conform to the shape of the object, ensuring a good seal and effective suction. The outer edge of the suction cup may have a sealing lip that helps create an airtight seal against the object's surface. This is crucial for maintaining the vacuum and preventing air leaks. The suction cup preferably has a mounting base or stem that attaches to the vacuum chamber of the venturi vacuum cartridge. This base is typically threaded or has a quick-connect fitting to ensure a secure and airtight connection.

The suction cup has a central port or opening that connects to the vacuum chamber. This port allows the vacuum to be applied directly to the object, creating the suction needed to hold it.

The bellows shape of a suction cup serves several important functions that enhance its performance and versatility in various applications. The bellows shape allows the suction cup to conform to irregular or uneven surfaces. This flexibility ensures a good seal even when the object's surface is not perfectly flat or smooth. The bellows design also enables the suction cup to adjust to different angles, making it easier to pick up objects that are not perfectly aligned with the end effector. The accordion-like structure of the bellows helps create a more airtight seal by distributing the suction force evenly across the contact area. This reduces the likelihood of air leaks, which could compromise the vacuum's effectiveness.
The bellows act as a shock absorber, reducing the impact when the suction cup makes contact with the object. This is particularly important in highspeed applications where the end effector may approach the object quickly. The cushioning effect helps protect both the suction cup and the object from damage, extending the lifespan of the suction cup and preventing damage to delicate objects. The bellows shape moreover helps distribute the vacuum force more evenly across the suction cup, ensuring that the entire surface area contributes to the grip. This results in a more secure hold on the object.

In a second embodiment of the invention, the venturi cartridge may be a multistage venturi vacuum generator. A multistage venturi vacuum generator is a device designed to create a vacuum using the Venturi effect, but with multiple stages to enhance its performance. In a multistage Venturi vacuum generator, the process that generates the vacuum is repeated multiple times in series. The output from the first stage (which still has some pressure) is fed into the second stage, where the process is repeated to create a deeper vacuum. This continues for each subsequent stage. Each stage builds upon the vacuum created by the previous stage, resulting in a higher overall vacuum level. By dividing the process into multiple stages, the generator can achieve a higher vacuum with less compressed air input, making it more efficient. Multistage generators can still produce a reasonable vacuum even when the input air pressure is lower.

In another embodiment, the vacuum chamber may be connected with the vacuum cartridge by means of an airtight sealing, which ensures that no pressure is lost between the vacuum chamber and the vacuum cartridge.

In another embodiment, the vacuum chamber features a vacuum sensor that is designed to measure the pressure in the vacuum chamber and provide a corresponding electrical output signal. Vacuum sensors are designed to measure pressures below atmospheric pressure, typically ranging from atmospheric pressure down to high vacuum levels. Vacuum sensors convert the measured pressure into an electrical signal, such as voltage or current, that can be easily interpreted by a control system or display device.

In the context of the invention, the measurement values generated by the vacuum sensor may indicate the presence of an attracted object at the suction cup. The generated vacuum may be increased or decreased depending on the measured values, for instance to ensure that the attraction of an object is sustained or even increased in case that for instance the vacuum seems to drop. Inversely, the measured values may for instance

Discussion of the dependent claims, highlighting the optional character and additional advantages thereof.

### Brief Description of the Drawings

Fig. 1 illustrates a frontal view on the vacuum end effector of the invention, of which the proximal portion is located at the top of the image;
Fig. 2 illustrates a lateral view on the vacuum end effector of the invention of which the proximal portion is located at the top of the image;
Fig. 3 illustrates a cross-section of a lateral view of the vacuum end effector of the invention of which the proximal portion is located at the top of the image;
Fig. 4 illustrates a cross-section of a frontal view of the vacuum end effector of the invention of which the proximal portion is located at the top of the image;

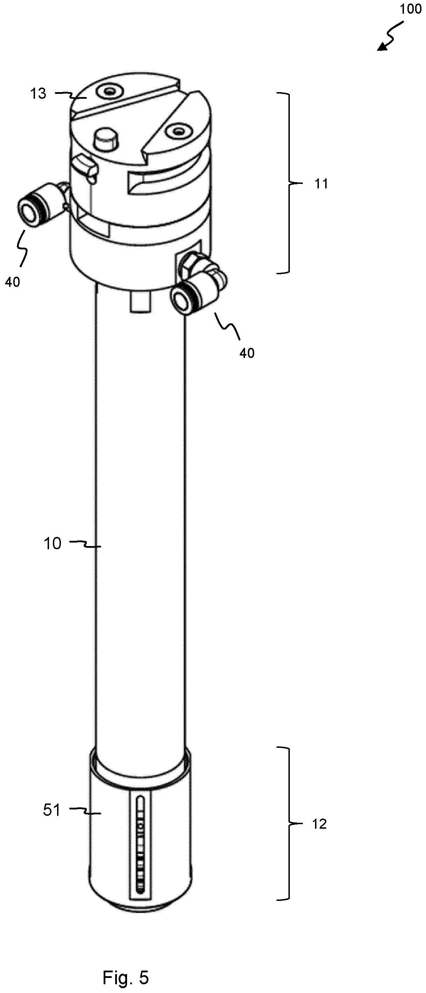

Fig. 5 illustrates a perspective view of the vacuum end effector of the invention of which the proximal portion is located at the top of the image.

### Detailed Description of Embodiment(s)

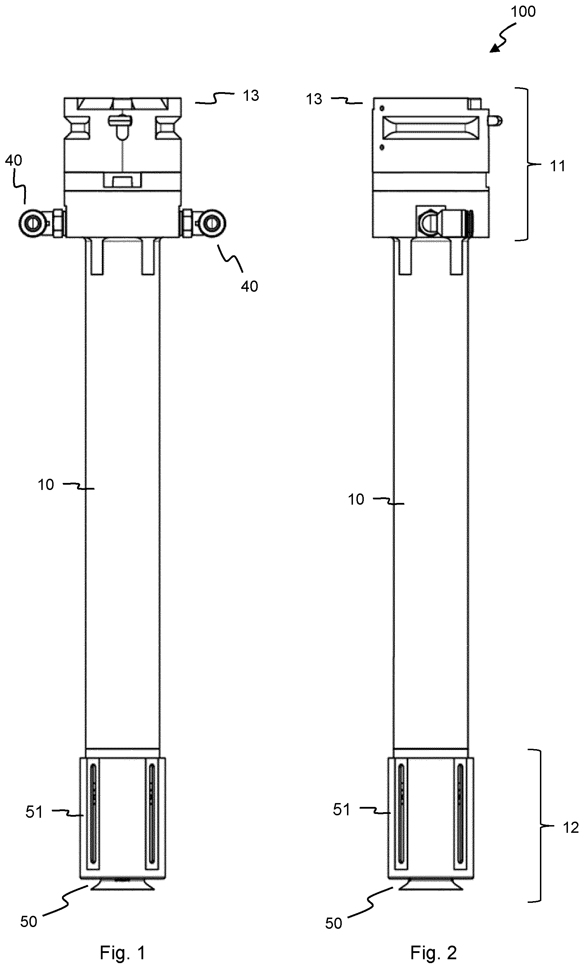

In Fig. 1, the vacuum end effector 100 for a robotic arm for industrial use comprises a longitudinal hollow body 10. The hollow body 10 includes a proximal portion 11 for mechanically coupling with the robotic arm and a distal portion 12 for picking up goods. The proximal portion 11 is equipped with a mechanical coupling 13 for removably coupling to the robotic arm, ensuring secure attachment and easy detachment when necessary. In the embodiment depicted in the drawings, the mechanical coupling 13 slides and locks into the attachment point of the robotic arm, which is not depicted. The distal portion 12 is designed to interact with the goods being handled.

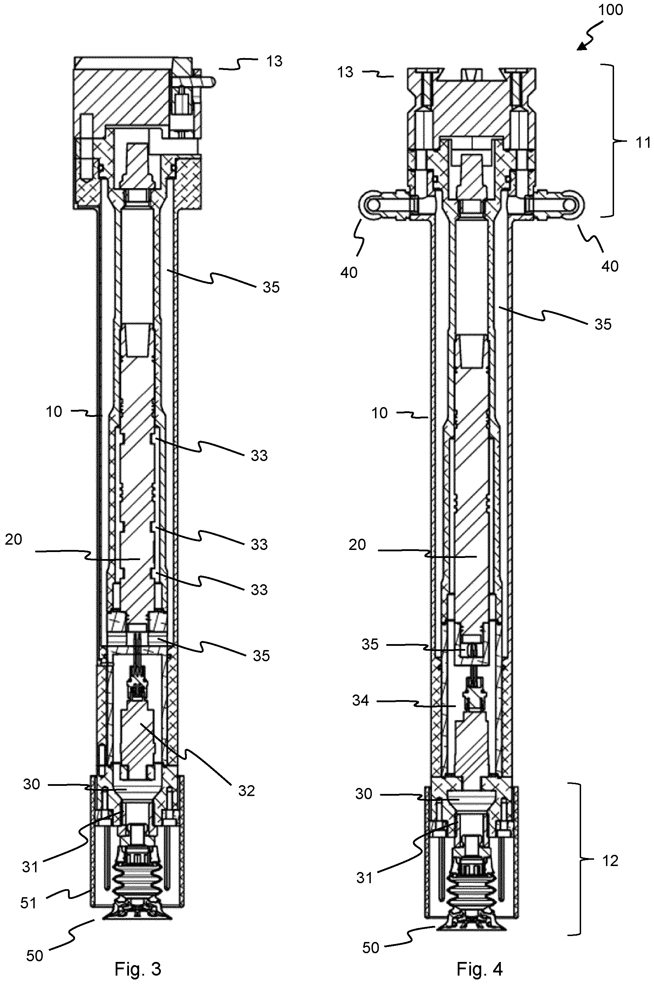

Integrated into the hollow body 10 is a venturi vacuum cartridge 20, which is configured to produce a vacuum in a vacuum chamber 30 located at the distal portion 12 of the hollow body when connected to a high-pressurized air input. The high-pressurized air is pushed along an input path 35 where it accelerated as the path becomes more constricted in the downward direction. The direction of the high-pressurized airflow continues in an opposite direction along a central hollow channel inside the vacuum cartridge 20. The vacuum is actually created at the suction ports 33 of the venturi vacuum cartridge 20 which are typically implemented as small valves over which the high pressurized air flows. The vacuum is build up in a channel around the multistage venturi vacuum cartridge 20 that is connected to a volume 34 around the vacuum sensor 32, to finally arrive in the vacuum chamber 30. The venturi vacuum cartridge 20 depicted in figures 3 and 4 is a multistage venturi vacuum generator, enhancing the efficiency and strength of the vacuum produced. The vacuum chamber 30 is equipped with an airtight sealing 31 to ensure no air leakage, maintaining the vacuum integrity. Additionally, the vacuum chamber 30 comprises a vacuum sensor 32 to monitor the vacuum level.

A high-pressurized air input connector 40 is provided at the proximal portion 11, feeding the venturi vacuum cartridge 20 with high-pressurized air. This connector 40 ensures a steady and reliable supply of air to the venturi vacuum cartridge 20, enabling consistent vacuum production. The high-pressurized air input connector 40 is strategically positioned at the proximal portion 11 for easy access and connection.

The vacuum end effector 100 also features a suction cup 50 connected via an airtight sealing 31 to the vacuum chamber 30 of the vacuum cartridge 20 at the proximal portion 11 of the hollow body 10. The suction cup 50 depicted in figures 3 and 4 is a multi-bellows suction cup, providing flexibility and a strong grip on various surfaces. Encasing the periphery of the suction cup 50 is a circumferential supporting sleeve 51, which offers additional structural support and protection to the suction cup 50. The height of the position of the sleeve 51 can be adjusted relative to the shaft in order to control the portion of the suction cup that is covered.

In operation, the high-pressurized air input connector 40 supplies air to the venturi vacuum cartridge 20, which then generates a vacuum in the vacuum chamber 30. The airtight sealing 31 ensures that the vacuum is maintained without any leaks between the vacuum chamber 30 and the suction cup 50. The vacuum sensor 32 continuously monitors the vacuum level, ensuring optimal performance. The suction ports 33 allow the suction cup 50 to be in contact with the produced vacuum of the vacuum cartridge, which allows the suction cup 50 to securely attach to the goods being handled. The circumferential supporting sleeve 51 provides additional support to the suction cup 50, ensuring a stable and secure grip, even when the end effector 100 operates at high speeds.

The vacuum end effector 100 also includes an air exhaust connector configured preferably at the proximal portion 11, allowing for the efficient release of air after the vacuum process away from the distal portion. Additionally, a weight sensor can be integrated to measure the presence of an object attached to the suction cup 50, and a vibration sensor can be included to measure haptic signals sensed at the suction cup 50, providing feedback on the handling process.

The main advantages of the vacuum end effector 100 include its efficient vacuum generation through the venturi vacuum cartridge 20, secure attachment to the robotic arm via the mechanical coupling 13, and the flexible and strong grip provided by the multi-bellows suction cup 50. The integration of sensors such as the vacuum sensor 32, weight sensor, and vibration sensor enhances the precision and reliability of the end effector, making it suitable for various industrial applications. The design ensures easy attachment and detachment from the robotic arm, efficient air supply and exhaust, and robust performance in handling goods.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A vacuum end effector (100) for a robotic arm for industrial use, comprising: a longitudinal hollow body (10), said hollow body comprising a proximal portion (11) for mechanically coupling with said robotic arm and a distal portion (12) for picking up goods,
a venturi vacuum cartridge (20) integrated into said hollow body (10) and configured to produce a vacuum in a vacuum chamber (30) that is configured at the distal portion (12) of said hollow body when connected to a high-pressurized air input,
a high-pressurized air input connector (40) feeding said venturi vacuum cartridge (20) with high-pressurized air, and
a suction cup (50) connected directly to said vacuum chamber (30) of said vacuum cartridge (20) at said proximal portion (11) of said hollow body (10).

2. The vacuum end effector (100) according to claim 1, wherein the venturi vacuum cartridge (20) is a multistage venturi vacuum generator.

3. The vacuum end effector (100) according to claim 1, wherein said proximal portion (11) comprises a mechanical coupling (13) for removably coupling to said robotic arm.

4. The vacuum end effector (100) according to any of the preceding claims, wherein the vacuum chamber (30) comprises an airtight sealing (31) with said suction cup (50).

5. The vacuum end effector (100) according to any of the preceding claims, wherein the vacuum chamber (30) comprises a vacuum sensor (32).

6. The vacuum end effector (100) according to any of the preceding claims, wherein the vacuum chamber (30) comprises at least one suction port (33) of the venturi vacuum cartridge (20).

7. The vacuum end effector (100) according to any of the preceding claims, wherein the suction cup (50) is a multi-bellows suction cup.

8. The vacuum end effector (100) according to any of the preceding claims, wherein the high-pressurized air input connector (40) is configured at said proximal portion (11).

9. The vacuum end effector according to any of the preceding claims, wherein an air exhaust connector is configured at said proximal portion.

10. The vacuum end effector according to any of the preceding claims, wherein a circumferential supporting sleeve (51) encases the suction cup's periphery.

11. The vacuum end effector according to any of the preceding claims, comprising a weight sensor configured to measure the presence of an object attached to the suction cup.

12. The vacuum end effector according to any of the preceding claims, comprising a vibration sensor configured to measure haptic signals sensed at the suction cup.
